# EUROPEAN PATENT SPECIFICATION

(11) **EP 4 361 745 B1**
(45) Date of publication and mention of the grant of the patent: **09.09.2026**
(21) Application number: 22204193.1
(22) Date of filing: 27.10.2022
(51) Int. Cl.: G05B 19/418

(54) **AUTONOMOUS OPERATION OF MODULAR INDUSTRIAL PLANTS**
AUTONOMER BETRIEB MODULARER INDUSTRIEANLAGEN
FONCTIONNEMENT AUTONOME D'INSTALLATIONS INDUSTRIELLES MODULAIRES

(43) Date of publication of application: 01.05.2024
(73) Proprietor: ABB SCHWEIZ AG, 5400 Baden (CH)
(72) Inventor: SARKAR, Santonu, 560076 Bangalore (IN); HOERNICKE, Mario, 76829 Landau (DE); SCHOCH, Nicolai, 69120 Heidelberg (DE)
(74) Representative: Maiwald GmbH

(56) References cited:
- WO-A1-2020/032947
- WO-A1-2020/190272
- US-A1- 2022 114 301

## Description

### FIELD OF THE INVENTION

The invention relates to autonomous operation of modular industrial plants.

### BACKGROUND

Modular industrial plants are typically built by integrating a set of pre-designed modules to form a production system. While modularity provides many benefits, typical plant operation scenarios require information relating to the process to be provided to a human operator for manual operation and control of the modular plant. This need for operator intervention calls for the operators to have experience of the pitfalls and risks that may occur during plant operation, while leading to potentially suboptimal plant operation and inefficient use of resources.

WO 2020/190272 A1, WO 2020/032947 A1, and US 2022/114301 A1 relate to process control in non-modular, monolithic plants.

### SUMMARY

It would therefore be advantageous to reduce or eliminate the need for operator intervention during operation of modular industrial plants. To better address one or more of these concerns, there is provided, in a first aspect, a method performed by an intelligent agent for autonomous operation of a module or a process orchestrator of a modular plant, as defined by claim 1. Optional features are set forth in the dependent claims.

The actions may comprise executable functions. The actions may comprise actions which would otherwise be taken by one or more human operators.

The module service receiving the transmitted one or more events may be executing on the same module with which the intelligent agent transmitting the event is associated, and/or on another module, for example a different module of the modular plant, perhaps one associated with a different intelligent agent. The events transmitted to the module service may comprise one or more events selected from the following set: {start, pause, resume, complete, hold, abort, recover, restart}.

For example, events may be transmitted to the process orchestrator in one or more of the following circumstances. Events might be raised when for example alarms occur, with the alarms being transmitted as events. State changes of a service might be transmitted as events. Conclusion of functions executed on the module might be transmitted as events.

The parameters may comprise or relate to one or more temperatures, flow rates, speeds, volumes, or weights. If, for example, a PID controller is not reaching a given setpoint, the PID controller can be tuned by increasing or decreasing the proportional gain, the integral or derivative part. If the result of the PID is e.g., oscillating, the agent may disable the derivative part by setting a corresponding parameter, thereby stabilizing the controller. Data indicating the bad working behavior can be collected, e.g., measured, before the tuning of the parameters takes place. In some examples, events raising alarms may show that process equipment which uses the parameter(s) in question is not working as expected.

The collected data may comprise, or form part of, one or more events output by the component with which the intelligent agent is associated or by another component. For example, a module agent collects data, for example in the form of events, from its module and/or from the process orchestrator. It may also receive alarms from the module. The orchestrator agent may receive events from each module.

The agent states may correspond to the states (i.e., environment states) of the component with which the intelligent agent is associated. As disclosed herein, there may be at least two types of intelligent agent: a module agent and an orchestrator agent. For the module agent, its environment states may correspond to those of the module which the module agent is controlling. For example, the environment states of the module agent may comprise one or more of the following set of service states for each service which the module provides: {RESETTING (R), IDLE; STARTING (St), EXECUTE (Ex), COMPLETING (Co), COMPLETED (C), HOLD (H), ABORT (A), PAUSING (Png), PAUSED (P), (RESUMING (Rsm)}. Since each module service has a predefined set of states, defined for example by the VDI2658 standard, and there is a finite number of services, the number of states that a module agent can have (say, N) is also predetermined. For the orchestrator agent, its environment states may correspond to those of the set of modules which the process orchestrator is controlling. Additionally, the environment states of the orchestrator agent may further comprise one or more process states, such as startup, steady state, process shutdown, emergency shutdown, as well as maintenance, commissioning. Other examples will be apparent to the person skilled in the art.

The policy function for a module agent is different from the policy function of an orchestrator agent. The set of actions that a module agent can take, and the set of alarms that a module can receive in a given state, are predefined, for example by the VDI2658 standard. The policy function, which provides a set of actions performable by the respective component in a given state, for given collected data (e.g., a given alarm or service parameter), may therefore be defined in a table, based for example on a template, for both the module agent and orchestrator agent. The policy function may further define the probability with which the intelligent agent takes a particular action from a current environment state in response to the collected data, such that the policy function in real implementations suggests the next action. For example, the policy function *π* may return the probability according to *π:S* × *Act* × {*Alm* u *Param*}→[0..1], where S is the set of environment states of the respective agent, *Act* is the set of predefined actions performable by that agent, and {*Alm* U *Param}* is the universal set of collected data (in this non-limiting example relating **to alarms** and parameters). In the case that the intelligent agent is a model agent for operating the module, the set of states *S* may comprise module states, the set of alarms *Alm* may comprise module alarms, and the set of parameters *Param* may comprise service parameters. In the case that the intelligent agent is an orchestration agent for operating the process orchestrator, the set of states *S* may comprise module states for all controlled modules as well as process states, the set of alarms *Alm* may comprise all module alarms plus process alarms, and the set of parameters *Param* may comprise all module parameters plus process parameters.

The reward function may be referred to as a feedback function. The intelligent agent may be configured to learn the policy function mapping collected data to actions in order to maximize the reward function. The feedback relating to the adaptive model received by the intelligent agent may comprise a reward. The reward may be determined after the intelligent agent has taken action, for example action leading to a transition in one or more environment states. The intelligent agent may be configured to obtain a current environment state and the reward in discrete time steps and then to determine the one or more actions to be taken from a set of predefined actions. The intelligent agent may be configured to learn the policy function as that which maximizes the expected cumulative reward. Training the policy function may involve using datasets comprising tuples, such as: <state, action, service parameters, reward>. Such tuples may be generated by the agent (both module agent and orchestrator agent) and may be used in replay memory. The intelligent agent may compute the reward based on the collected data and the action taken. This reward is then usable by the policy function to decide the next action. Rewards can be defined for an agent (module or orchestrator) in several ways. One way is to define a set of rules, which take the current state, the action taken and the data collected, e.g., the event received (state change event from the module, event from orchestrator, alarm raised), and generate a reward value. The reward value is a number. For instance, it can be between 0..1, where 1 signifies the highest reward. Reward can also be adaptive, and it can be discovered using a machine learning approach. One such approach has been outlined in: "Evolving Rewards to Automate Reinforcement Learning"- 6th ICML workshop on automated machine learning, 2019. The technique of Inverse Reinforcement Learning (https://ai.stanford.edu/~ang/papers/icml00-irl.pdf, or https://doi.org/10.1016/j.artint.2021.103500 ) is another approach to develop an adaptive reward function.

In view of the above, the steps of receiving feedback relating to the adaptive model and updating the adaptive model based on the received feedback may comprise determining a reward based on action taken and learning the policy function based thereon, for example to maximize the expected cumulative reward. Additionally or alternatively, receiving feedback may comprise receiving one or more indications of actions to be added to, or removed from, the adaptive model, and updating the model accordingly, for example by updating the policy function. Feedback comprising such indications may be provided for example by the orchestration agent. Additionally or alternatively, the steps of receiving feedback relating to the adaptive model and updating the adaptive model based on the received feedback may be performed to reflect the fine tuning of parameters in the model, as described herein.

Agents of different types may interact with each other. In particular, the different types of agents may interact following a master-worker mode, where the workers (module agents) send events to the master (orchestrator agent), which sends events back to the module agents. In one non-limiting example in the energy sector, in which a heating module comprises a boiler and other associated equipment, the module 102 receives a combustion value as process parameter for the "heating" service. The service generates heat and also generates emissions. The process orchestrator 104 of the plant has the overall goal to optimize the emission value. The optimal emission value is thus taken as the reward function 310B for the orchestrator agent 200. The orchestrator agent 200 uses a policy function 310A that changes the combustion value. Once the orchestrator agent 200 changes the combustion value (depending on its own reward), the combustion value is received by the module agent 200 and the modified value is set for the heating service. Since this module 102 may be reused in different contexts, the optimal combustion parameter value can change in another process plant in which this module 102 is used. The module agent 200 and the orchestrator agent 200 thus learn the optimal combustion parameter through their interaction in a particular industrial process context.

According to a second aspect, there is provided an intelligent agent configured to perform the method of the first aspect. The intelligent agent of the second aspect may comprise, or form part of, a computing system, such as that described herein. The intelligent agent of the second aspect may comprise a module agent. The intelligent agent of the second aspect may comprise an orchestration agent.

Creating the product may comprise transforming one or more educts into the product via one or more process steps carried by the modules.

The method of the first aspect may be computer implemented.

According to a third aspect, there is provided a computer program comprising instructions which, when executed by a computing system, enable or cause the computing system to perform the method of the first aspect.

According to a fourth aspect, there is provided a computer-readable medium comprising instructions which, when executed by a computing system, enable or cause the computing system to perform the method of the first aspect. The computer-readable medium may be transitory or non-transitory, volatile or non-volatile.

The intelligent agents as described herein enable operator intervention to be eliminated or reduced, which can make modular plants more scalable since fewer human operators are required to supervise multiple processes.

Tuning parameters using intelligent agents as described herein enables more efficient and even optimal operation of the modular plant.

Using the learning approaches as described herein mitigates the need for (and the extent of) human policy definition as well as the evaluation/assessment/labeling of input, enabling such input to be used only where it is really needed.

Creating and using intelligent agents for modules and the process orchestrator enables the modular plant to become more adaptive. Allowing these agents to interact with themselves after the modular plant is commissioned to maintain functionality and handle erroneous scenarios may reduce operation and maintenance efforts, at least partially prevent malfunctioning of modules and the plant, and provide for safer plant operation.

Using the intelligent agents described herein, modules and the orchestration mechanism may become more adaptive, knowledge-driven, and autonomous. The modular plant thus functions as an agent-based, distributed system. Modules and orchestrators may work in tandem to learn from the operational environment and to enrich their already learned model, e.g., via "Active Learning" or "Optimal Experimental Design" (OED) approaches, so as to reduce the amount and frequency of human intervention that is necessary. The intelligent agents may be used to predict imminent failures or unsafe conditions and to guides modules to a safe state.

Autonomous tuning of parameters may lead to faster and/or more sensitive reactions to changing process states.

The term "obtaining", as used herein, may comprise, for example, receiving from another system, device, or process; receiving via an interaction with a user; loading or retrieving from storage or memory; measuring or capturing using sensors or other data acquisition devices.

The term "determining", as used herein, encompasses a wide variety of actions, and may comprise, for example, calculating, computing, processing, deriving, investigating, looking up (e.g., looking up in a table, a database or another data structure), ascertaining, and the like. Also, "determining" may comprise receiving (e.g., receiving information), accessing (e.g., accessing data in a memory), and the like. Also, "determining" may comprise resolving, selecting, choosing, establishing and the like.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

These and other aspects of the invention will be apparent from and elucidated with reference to the embodiments described hereinafter.

### BRIEF DESCRIPTION OF THE DRAWINGS

A detailed description will now be given, by way of example only, with reference to the accompanying drawings, in which:-
FIG. 1A illustrates a modular plant in conjunction with which the systems and methods disclosed herein may be used;
FIG. 1B illustrates one example of a standardized state machine for defining a service provided by one of the modules of FIG. 1A;
FIG. 2 illustrates the modular plant of FIG. 1 adapted to comprise an intelligent agent as disclosed herein;
FIG. 3 illustrates the intelligent agent of FIG. 2 in more detail;
FIG. 4A illustrates one non-limiting example of a modular plant;
FIG. 4B illustrates one non-limiting example of a process recipe which may be carried out by the modular plant of FIG. 4A;
FIG. 5 illustrates a method of creating and deploying an agent-based process orchestration system;
FIG. 6 illustrates a process engineering system which may be used to perform the method of FIG. 5;
FIGS. 7A-7C illustrate various ways in which the agent-based process orchestration system created using the method of FIG. 5 can be deployed; and
FIG. 8 illustrates a computing system that can be used in accordance with the systems and methods disclosed herein.

### DETAILED DESCRIPTION

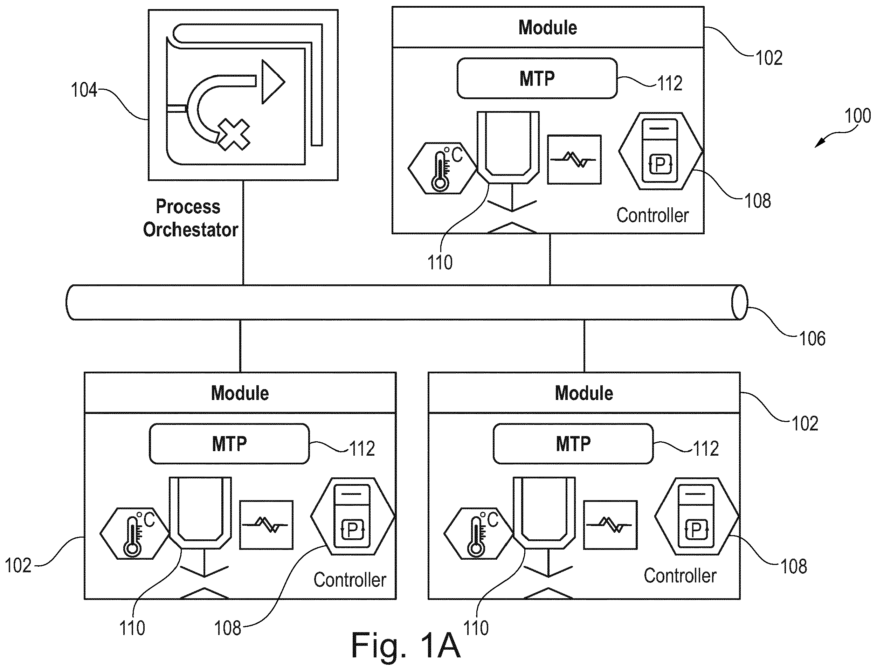

FIG. 1A illustrates a modular plant 100 in conjunction with which the systems and methods described herein may be used. The modular plant 100 comprises a plurality of modules 102 and a process orchestrator 104 interconnected by an architecture network 106. The modular plant 100 may be referred to as a modular industrial plant, a modular process plant, or a modular automation system, as is known in the art.

Each module 102 comprises a controller 108 executing control logic (automation logic) for the module 102, along with a set of instruments 110, whose functionalities are exposed by the module 102 as a set of services, such as mixing, tempering, heating, and so on. Each module 102 is described by a configuration file in the form of a module type package (MTP) 112. The MTPs 112 provide a standardized framework for interoperability between the modules 102 and the process orchestrator 104. In the context of MTP standards, the modules 102 may be referred to as process equipment assemblies (PEAs). Each MTP 112 provides a module type description. The MTP 112 may define, for example, one or more of (i) communications with the module; (ii) the human-machine interface (HMI) of the module, illustrating the equipment and the process flow, for example in the form of a piping and instrumentation diagram (P&ID); (iii) definitions of tags used by the module; (iv) definitions of services provided by the module (for example, definitions of the automation logic using e.g. state machines); (v) alarm management procedures used by the module; (vi) safety aspects. Using the MTP 112, control software for the module 102 may be automatically generated, to be executed by its controller 108.

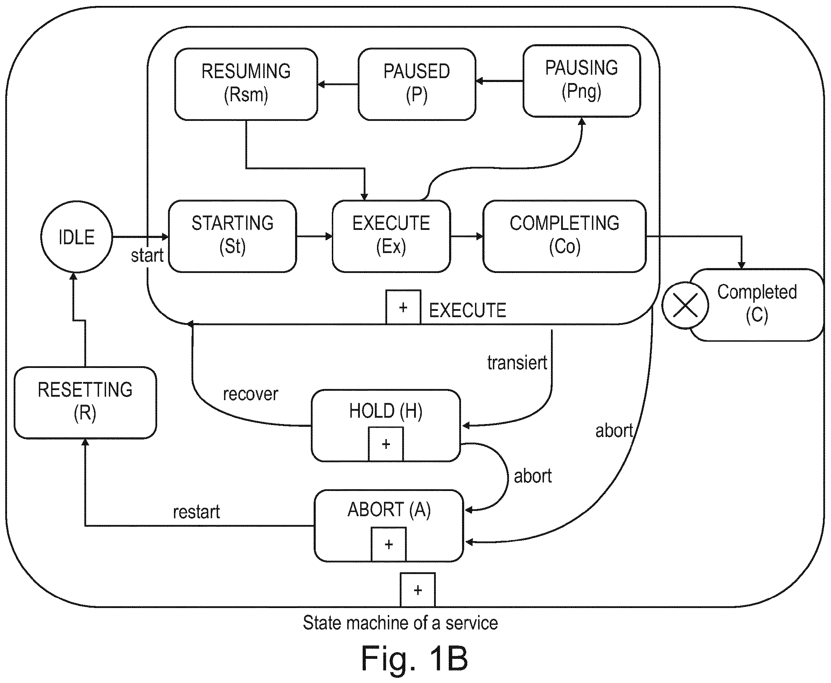

FIG. 1B illustrates one example of a standardized state machine 150 for defining a service provided by one of the modules 102. As shown, the state machine 150 comprises various states, such as "STARTING", "EXECUTE", "COMPLETING", and so on, as well as events causing transitions between the states, e.g. "start", "abort", and so on.

The process orchestrator 104 integrates the modules 102 into the modular plant 100 by orchestrating the services of the various modules 102 to carry out a given process recipe.

The architecture network 106 facilitates communications between the modules 102 and the process orchestrator 104. Communications may take place using the OPC Unified Architecture (OPC UA) protocol, a machine-to-machine communication protocol for industrial automation developed by the OPC Foundation. To this end, each module 102 may further comprise an OPC UA server (not shown) which exposes the services of the module 102 to the process orchestrator 104. Similarly, the process orchestrator 104 may further comprise an OPC UA client (not shown) which connects to the OPC UA servers to communicate commands to the modules 102. By controlling the services in the right way, the process orchestrator 104 combines the modules 110 together to fulfil the requirements of the modular plant 100.

As mentioned above, current plant operation scenarios typically require information relating to the process to be provided to a human operator for manual operation and control of the modular plant 100, which can lead to several problems.

For example, state transitions may lead to cascaded errors. For instance, in case of an internal error in one module, that module may change its state from "EXECUTE" to "PAUSED", which may require another module to go to the "HOLD" state from the "EXECUTE" state. It is not guaranteed that such a scenario is always handled automatically, such that operator intervention may be required.

Moreover, it is often the case that service parameter tuning for running services of modules 102 can require operator intervention. The modules 102 are typically designed to be usable for a variety of processes. The modules 102 may not therefore be tuned for a specific process. Default values may be defined for various parameters to provide a stable, but not necessarily optimal process performance. Tuning of parameters is typically undertaken by the human operator.

Furthermore, operator intervention may be required for monitoring long running process. There are some processes, e.g., tempering processes, which can proceed slowly. Even if a process is automated completely, it might be the case that the reaction from the automation system is also slow, such that operator intervention may again be required.

The present disclosure proposes to address one or more of these problems by combining the existing modular plant 100 with an agent-based operator system.

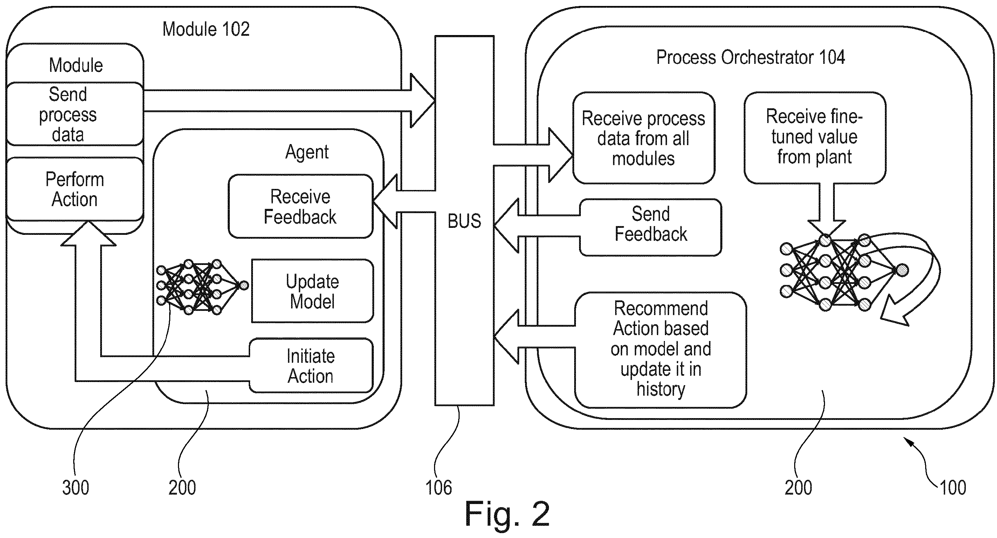

FIG. 2 illustrates (part of) the modular plant 100 adapted according to the present disclosure. As shown, one or more of the modules 102 may be supplemented with an intelligent agent 200. Additionally or alternatively, the process orchestrator 104 may be supplemented with an intelligent agent 200. The intelligent agent 200 is referred to herein as a module agent when associated with a module 102 and as an orchestration agent when associated with the process orchestrator 104. Unless otherwise described, the components shown in FIG. 2 are the same as those described with reference to FIG. 1A, with the same reference signs being used to represent like components. FIG. 2 also shows the information flow between the module agent 200 and the orchestrator agent 200, according to one non-limiting example. The module 102 and the module agent 200 work in tandem. The module 102 performs actions (process functionality) based on measured process data and also sends process data to the process orchestrator 104, as known in the art. Additionally, the module agent 200 receives feedback (e.g., as an event) from the process orchestrator 104. Based on the received feedback, the module agent 200 may update its model, or it can initiate an action on the module 102. The orchestrator agent receives process data from all modules and sends the said feedback, which may involve recommending that a module agent initiate an action or update its model. The orchestrator agent may also receive information concerning parameters which have been fine-tuned and may accordingly update its own model.

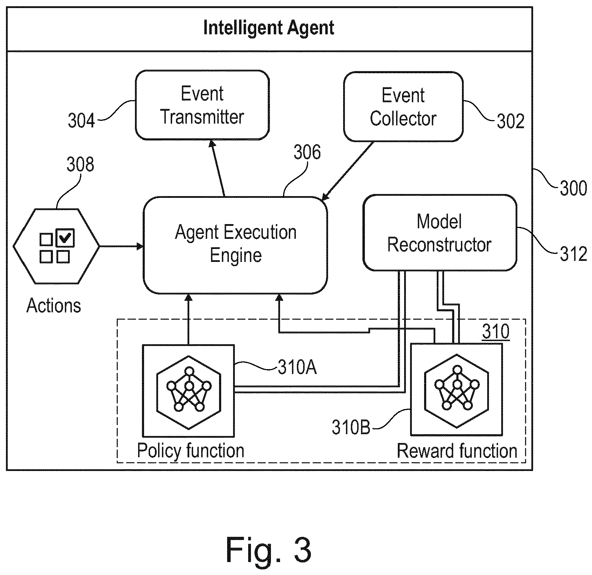

FIG. 3 shows the intelligent agent 200 in more detail.

The intelligent agent 200 comprises an event collector 302 for collecting data from the environment. For example, the module agent may collect events from its module and/or from the process orchestrator. The orchestrator agent may collect events from each of the modules.

The intelligent agent 200 further comprises an event transmitter 304 for transmitting events to other agents or components, for example to module services executing on the module 102 with which the intelligent agent 200 is associated, and/or to module services executing on other modules 102, and/or to the process orchestrator 104. For example, the module agent may send events to the orchestrator agent.

The collection and transmission of events is handled by an agent execution engine 306. The agent execution engine 30 implements state transitions by performing actions. The agent execution engine 306 has access to a set of predefined actions 308, as executable functions, which may be taken by the intelligent agent 200. The agent execution engine 306 is configured to determine one or more actions 308 to take at any given timepoint through the use of an adaptive model 310, which learns a policy function 310A that maps collectable data to actions so as to maximize a reward function 310B. The intelligent agent 200 may be software implemented, for example.

The agent execution engine 306 when associated as a module agent with a module *m* may be represented by A = 〈*S,Actₘ,Tₘ,Alm, ServParam, Rₘ,π*〉.

The set S of states may comprise, for example, for each module service, one or more of: {RESETTING (R), IDLE; STARTING (St), EXECUTE (Ex), COMPLETING (Co), COMPLETED (C), HOLD (H), ABORT (A), PAUSING (Png), PAUSED (P), (RESUMING (Rsm)}, as defined in the service specification document (VDI2658-4), and as shown in FIG. 1A, for example.

In one non-limiting example, the set *Actₘ* of actions 308 taken by the intelligent agent 200 comprises one or more of the following:-
i) Modify/tune service parameters;
ii) Send event to a module service. The events comprise, for example: *{start, pause, resume, complete, hold, abort, recover, restart}.* For instance, *start(srv)* indicates a start event to be transmitted to service *srv.*
iii) Send event to the process orchestrator 104.

The state transition function *Tₘ, T: S* × *Act* × *S*→[0..1], defines the probability with which the intelligent agent 200 causes a transition from its current state to another state by taking an action 308.

*Alm* is a set of alarms that the module agent can receive from the module 102 in the form of collected events (for example, according to the VDI2658 standard).

*ServParam* is a set of service parameters used in connection with the module 102 that can also be collected by the event collector 302.

*Rₘ* is the reward function 310B, *Rₘ*: *S* × *Act* × *S*→[0..1], which returns a real number, where 0 means no reward and 1 is the highest reward.

*π* is the policy function 310A, *π*:*S* × *Act* × {*Alm* ∪ *ServParam*}→[0..1], which describes the probability with which the intelligent agent 200 takes an action 308 from its current state, based on collected data, such as an alarm or a service parameter value.

The intelligent agent 200 further comprises a model reconstructor 312, which updates (e.g., fine tunes) the adaptive model 310. For instance, in the case that the policy function 310A is implemented using a deep Q model, where the policy function 310A is a deep learning model that approximates the policy function characteristics, the model reconstructor 312 can modify the policy function 310A with a new dataset. The new dataset can be generated as the agent 200 starts functioning and then stored in replay memory for retraining purposes. The reward function 310B may also comprise a machine learned model. In this case, inverse reinforcement learning may be used, where the reward function is learnt over time. In such a case, the model reconstructor 312 becomes responsible for training and retraining the reward function 310B. Therefore, the model reconstructor 312 can be implemented in different ways. In the case that the adaptive model 310 comprises one or more machine learning models, for example if the policy function 310A and the reward function 310B are based on deep-learning models, then the model reconstructor 312 may be configured to check the performance of these models and initiate retraining, or to fine tune the reward function 310B. If the adaptive model is rule-based, the model reconstructor 312 may be configured to add, modify or remove rules (policies).

The intelligent agent 200 may further comprise, or be configured to interoperate with, a process parameter predictor (not shown). The process parameter predictor may comprise a machine learning based component configured to learn the optimal process parameter value over time. The intelligent agent 200, for example the module agent, may then set the optimal value (learnt over time) to the module 102. In one non-limiting example in which the module 102 performs feeding and mixing (two services) as part of a mining operation, the module agent that manages this module 102 learns the optimal feeding parameter that results in optimal CO₂ emission per ton. This optimal CO₂ emission per ton can be a process level objective, which is available to the process orchestrator 104. Based on orchestrator instructions, the module agent 200 changes the feeding parameter values over time and uses the modified parameter values as training data for training the machine learning model of the process parameter predictor. Whenever a new feeding parameter value is learnt, this value may be set by the module agent 200 whenever the feeding service is invoked in the plant. One suitable approach for learning optimal process parameters is described for example at https://www.sentian.ai/#. The present disclosure envisages that this approach may be applied to modular automation.

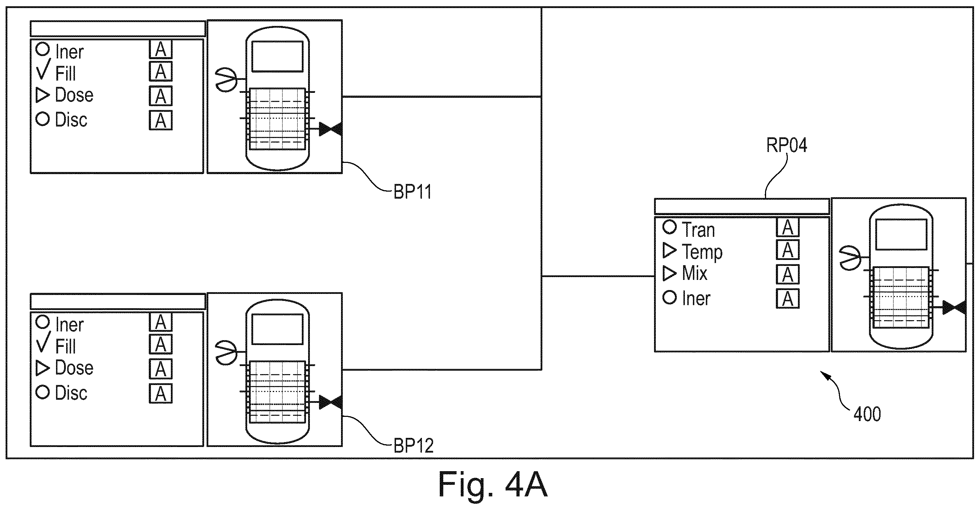

FIG. 4A shows one example of a modular plant 400 comprising two feeder modules BP11, BP12 and one reactor module RP04 in order to explain the role of the module agent. Each feeder module provides three services *{Fill (F), Dose (Do), Discharge (Di)}.* Each service has a set of states defined by the VDI2658 service specification. The intelligent agent 200 (denoted by *A_{BP}*) associated with each feeder module BP11, BP12 therefore has states: *S =* {〈*R_{F},R_{do},R_{di}*〉, 〈*R_{F},St_{do},R_{di}*〉,〈*R_{F},R_{do},St_{di}*〉,...}. If the number of states of each service is N (as per the VDI2658 standard), the intelligent agent *A_{BP}* will have |*S*| = 3 × N states representing the three services.

The following table provides examples of service parameters used by the services of the feeder and reactor modules.

**Table 1**

| **Module type** | **Instances** | **Used services** | **Service parameters** | **Description** |
|---|---|---|---|---|
| Feeder | BP11, BP12 | **Fill** (F) | amount | percentage of tank max capacity |
| | | Dose (Do) | spflow | Setpoint for a constant flow to succeeding module in I/h |
| | | | amount | Total amount that should be dosed in succeeding module in I |
| | | Discharge (Di) | rest | Allowed remaining liquid in the feeder in I |
| Reactor | RP04 | Tempering (temp) | sptemp | Setpoint for the temperature in °C |
| | | Mix | speed | Rotation speed for the mixer |
| | | Transportation (Trans) | - | |

The set of actions 308 in this non-limiting example may comprise the following:
a. To avoid failures, the agent 200 takes an action *hold(F)* to change the state of the "Fill" service (F) of a feeder module BP11, BP12 from "EXECUTE" to "HOLD" in response to a critical alarm *Alm* being generated. The alarm *Alm* may be raised when the pressure of a transmitter become too high, for example. In this example, the relevant standards specification (e.g. MTP) may require that, in the "EXECUTE" state, the action *hold(F)* be taken when *Alm* becomes true. The policy function 310A may therefore assign a high probability (e.g., 0.9) to this action.
b. Trigger another service based on output of a service. For instance, the agent 200 takes an action *start*(*Do*) to start the "Dose" service of one of the feeder modules BP11, BP12. The policy function 310A may assign a probability of 1.0 to this action.
c. Fine tune service parameter. For instance, the agent 200 increments the value of the "speed" parameter of the reactor module RP04 when the state of the "Mix" service is "EXECUTE", in response to an alarm value indicating that the liquid viscosity is too high. This is done to increase the speed of the mixing to keep the viscosity constant. The agent 200 remains in the same state.
d. Send an event to the process orchestrator 104. The event might comprise a notification for the process orchestrator 104 that something was changed by the agent 200. Then the process orchestrator 104 can react to this.

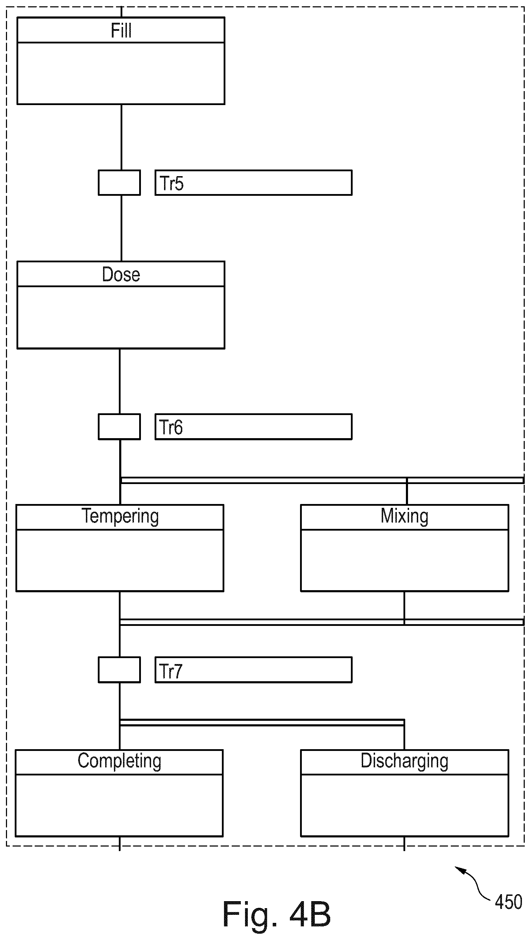

**FIG. 4B** **illustrates** one non-limiting example of a recipe for a process 450 which may be carried out by the modular plant 400 of FIG. 4A, in order to explain the role of the orchestration agent.

The orchestrator agent has a similar structure to the module agent and may be represented as *MAₒ =* 〈*Sₒ,Actₒ,Tₒ,Alm, ProcParam, Rₒ,πₒ*〉, where *Sₒ* is the set S of states of all modules controlled by the process orchestrator 104 and of the process 450 itself, *Actₒ* is the set of actions 308 taken by the orchestration agent 200, *Tₒ* is the state transition function, *Alm* is a set of alarms that the process orchestrator 102 can receive in the form of collected events, *ProcParam* is a set of process parameters used in connection with the process orchestrator 104 that can also be collected by the event collector 302, *Rₒ* is the reward function 310B of the orchestration agent 200, and *πₒ* is its policy function 310A.

The policy function *πₒ* for the orchestration agent 200 is based on alarms and process parameter values rather than values for individual modules or services. For example, policies for the orchestration agent 200 may comprise the following:-
a. When the current state of the process 450 is "tempering and mixing", and the process parameter "educt_viscosity==high", then the action should be "increment BP11.speed" with probability 0.9.
b. When the current state of the process 450 is "tempering and mixing", and the process parameter "educt_ph==high", then the action should be "decrement BP11.speed" with probability 0.9.

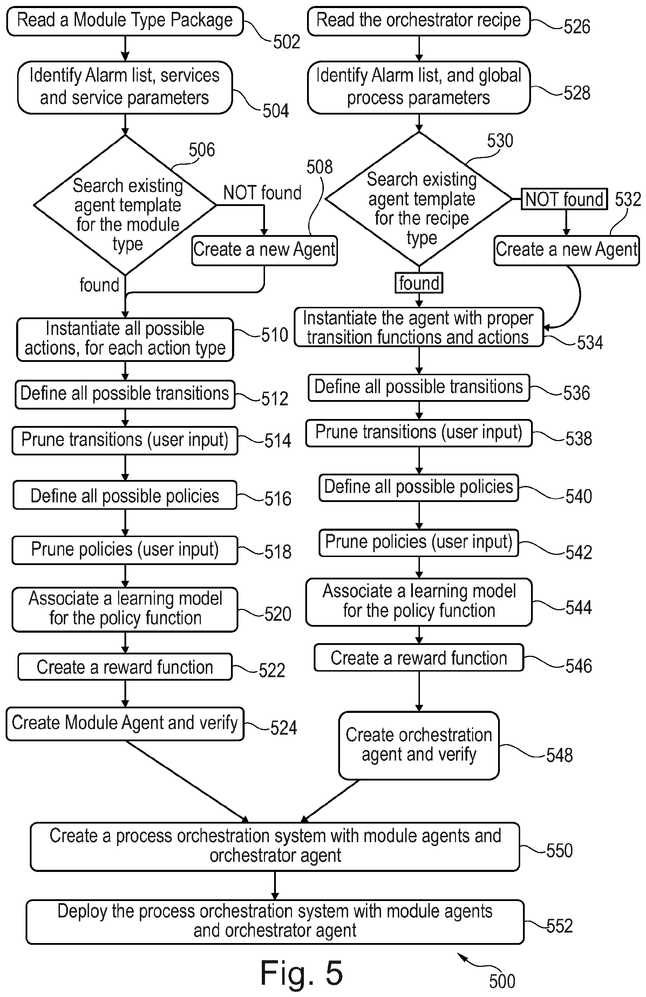

FIG. 5 illustrates a method of creating a module agent, a method of creating an orchestration agent, and a method of creating an adaptive process including the so-created intelligent agents.

The method of creating the module agent 200 begins with step 502, comprising reading the module type package (MTP) 112 for the module 102 with which the module agent 200 is to be associated. Step 504 comprises identifying alarms, services, and service parameters for the module 102 using the MTP 112. Step 506 determines whether an existing agent template for the module agent 200 can be found. If so, the method proceeds to step 510. Otherwise, a new agent is created in step 508. At step 510, the set of actions 308 comprising actions for each action type is instantiated. Transitions are defined at step 512. The list of transitions is optionally pruned on the basis of user input at step 514. Step 516 comprises defining policies, with the list of policies optionally being pruned on the basis of user input at step 518. Step 520 associates a learning model for the policy function 310A. Step 522 comprises creating the reward function 310B. Finally, the module agent 200 is created and optionally verified in step 524.

Equivalently, the method of creating the orchestration agent 200 begins with step 526, comprising reading the process recipe 450 to be carried out by the process orchestrator 104 with which the orchestration agent 200 is to be associated. Step 528 comprises identifying alarms and process parameters for the process 450. Step 530 determines whether an existing agent template for the orchestration agent 200 can be found. If so, the method proceeds to step 534. Otherwise, a new agent is created in step 532. At step 534, the set of actions 308 comprising actions for each action type is instantiated, along with proper transition functions. Transitions are defined at step 536. The list of transitions is optionally pruned on the basis of user input at step 538. Step 540 comprises defining policies, with the list of policies optionally being pruned on the basis of user input at step 542. Step 544 associates a learning model for the policy function 310A. Step 546 comprises creating the reward function 310B. Finally, the module agent 200 is created and optionally verified in step 548.

The method of creating the adaptive process comprises the step 550 of creating a process orchestration system comprising the so-created module agent 200 and the orchestration agent 200, followed by the step 552 of deploying the so-created multi-agent process orchestration system.

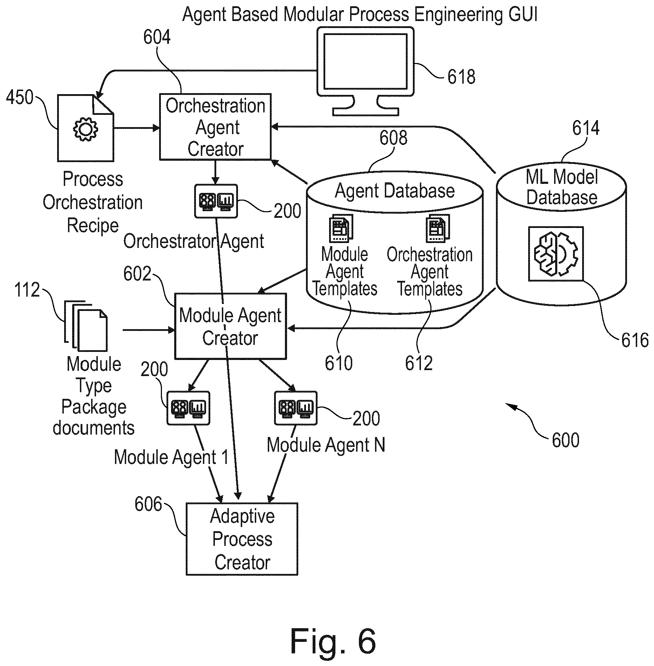

FIG. 6 illustrates a process engineering system 600 which may be used to perform the method 500 of FIG. 5. As shown, the process engineering system 600 comprises a module agent creator 602 configured to perform the method of creating a module agent as described with reference to FIG. 5, steps 502-524. The system 600 further comprises an orchestration agent creator 604 configured to perform the method of creating an orchestration agent as described with reference to FIG. 5, steps 526-548. The system 600 further comprises an adaptive process creator 606 configured to perform the method of creating an adaptive process described with reference to FIG. 5, steps 550-552.

The module agent creator 602 has access to the MTP specifications 112 and creates the necessary components for the module agent 200, such as the adaptive model 310 described herein. The module agent creator 602 optionally uses one or more module agent templates 610 available in an agent database 608 for creating the module agent 200. For example, the module agent creator 602 may create the policy function 310A and reward function 310B for the module agent 200 using a template model 616 obtained from an ML model database 614.

To generate the policy function 310A, the module agent creator 602 may complete a default policy table in the template model 616 using information retrieved from the MTP specification 112 for the particular module 102 and from any relevant standards specifications. From these sources, the module agent creator 602 may obtain some or all of the following information: the services provided by the module 102; the set of alarms and service parameters for each service, which in turn defines the number of states used by the module 102; state transitions; a definition of which alarms are possible in which state; a set of actions, such as i) modify a service parameter, ii) send a particular event to a service, iii) send an event to the orchestrator and so on; preferred actions associated with one or more of the states. The completed the policy table thus comprises an entry for at least one of the states of the module 102 and defines, for each state, one or more actions to be taken based on the alarms and service parameters of the relevant service. In one example, the table comprises an entry for each state that the module 102 can have. Furthermore, actions allowed in composite states can be derived. For example, if the policy table defines actions a1, a2 to be valid for a state s1, and actions a2, a3 to be valid for a state s2, the set of valid actions for the composite state <s1,s2> can be a1, a2, a3. The actions taken in a given state can be made dependent on a condition. A condition can be based on an alarm or a service parameter value. Since the module agent creator 602 obtains information about the set of alarms or service parameters associated with a particular state of a particular service from the MTP specification 112, an action associated with a composite state, depending on a particular alarm or service parameter, can be derived. State transitions may be stochastic: the policy function 310A may be deterministic or stochastic, based on probability values. A default probability value can be associated with each state, action, or condition (alarm or service parameter values). The module agent creator 602 may also allow the module agent designer to fine-tune the policy table using the GUI 618, which may provide a policy table editor whereby the module agent designer can change the set of actions associated with a state and an alarm/service parameter value combination. Active learning based approaches may be used to reduce the amount of human fine tuning.

To generate the reward function 310B, the module agent creator 602 may use a predetermined set of rewards based on optimizing process functionalities. In one non-limiting example, the set of predetermined objectives can relate to one or more of the following: parameter values, such as setpoint value correction; managing alarms; taking action to prevent imminent failures; promoting actions that have been directly instructed by the process orchestrator 104. The module agent creator 602 uses these predetermined objectives to instantiate the reward function 310B for a particular module 102 by analyzing its set of services, process parameters and possible alarms. The module agent creator 602 may construct the reward function 310B in various ways. In one non-limiting example, the module agent creator 602 performs the following to generate the reward function 310B:
1. The module agent creator 602 uses an ordinal value set between [0..1], where 0 indicates the worst reward value and 1 indicates the best reward value. For instance, these ordinal values can be {0, 0.25, 0.5, 0.75, 1}. If the reward R is close to 1, the agent 200 will be urged to continue its normal operation.
2. For each parameter with setpoints (obtained from the MTP specification 112), the module agent creator 602 obtains the ideal setpoint value (real number or integer) X_{ideal}, for example from the MTP specification 112 or from the user. The reward function 310B can then generated in the following manner: R= 1 if (X_{actual} - 0.75*X_{ideal}) < first threshold value (e.g., a small quantity), or R= 0 if (X_{actual} - 0.25*X_{ideal}) > second threshold value. These threshold values can be preset and/or can be fine-tuned by the user.
3. The reward function 310B may be configured to return a poor reward, for example 0 or a value of R anywhere between 0- 0.5, if an alarm is raised. For instance, if there is an alarm indicating that the parameter Liq.Viscosity is high, the reward function 310B may return a value of R which is positioned between 0.0 and 0.5 depending on the viscosity. For alarms related to failures or problematic cases, such as when the module is in the "EXECUTE" state, the reward function 310B may be configured to return a value of R = 0.

Created module agents 200 are then passed to the adaptive process creator 606.

The orchestration agent creator 604 has access to one or more process recipes 450, such as that shown in FIG. 4A, and uses these as described with reference to FIG. 5 to create the orchestration agent 200, optionally using one or more orchestration agent templates 612 obtained from the agent database 608. The orchestration agent creator 604 also has access to the ML model database 614 for associating an appropriate ML model 616 with the policy function 310A of the orchestration agent 200. Created orchestration agents 200 are then passed to the adaptive process creator 606.

The adaptive process creator 606 interacts with the user through the process engineering GUI 618 to generate executable code for the module agents, the orchestrator agent, and then deploy the agent-based process orchestration system.

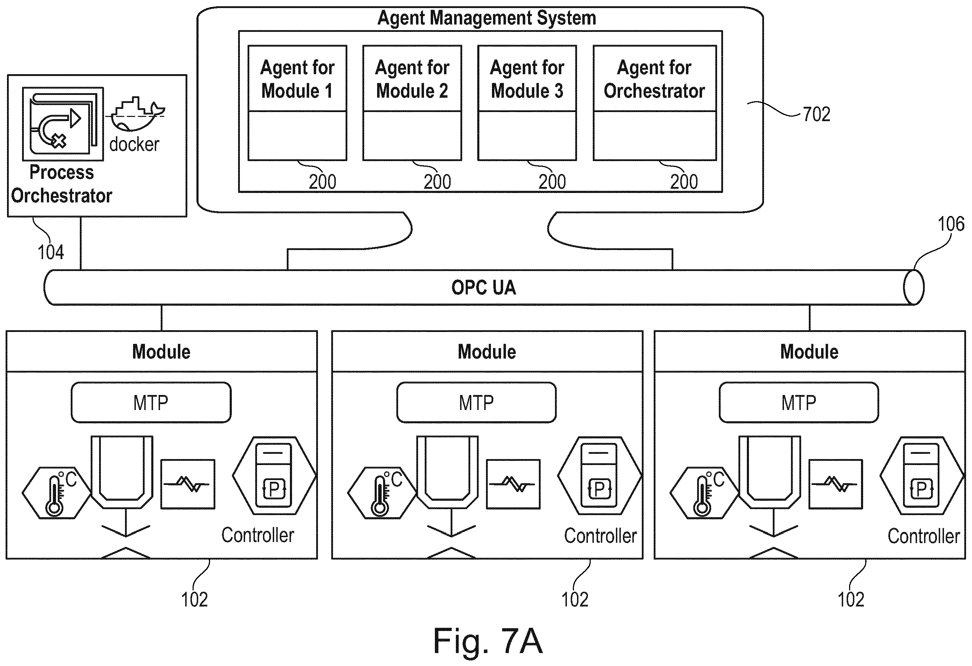

FIGS. 7A-7C illustrate various ways in which the so-created agent-based process orchestration system can be deployed.

FIG. 7A illustrates a first deployment scenario in which the existing modules 102 and process orchestrator 104 remain unchanged, while the agent-based process orchestration 702 comprising the intelligent agents 200 for each module 102 and for the process orchestrator 104 is deployed as a separate computing system connected to the other components via the network 106.

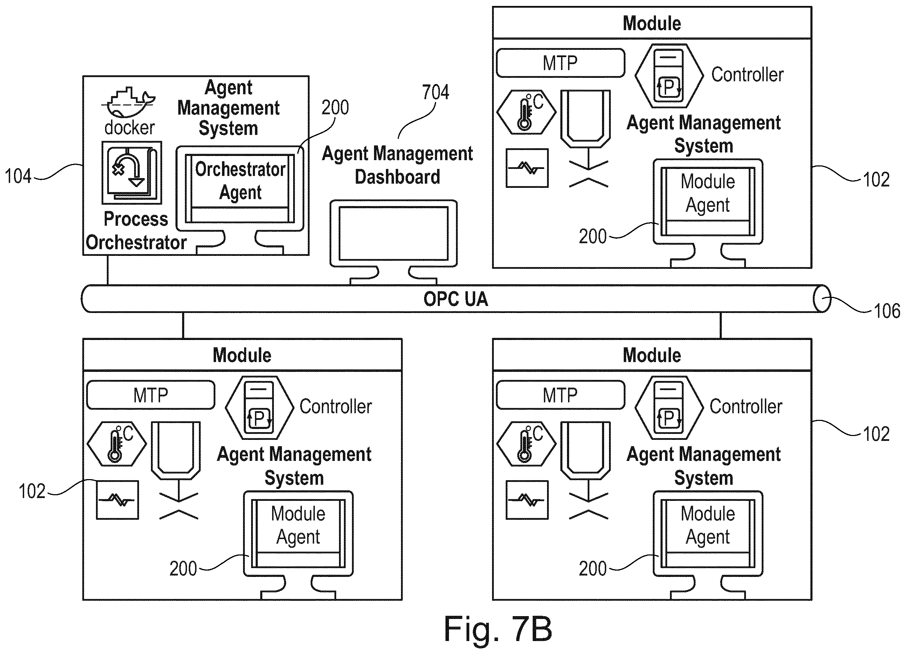

FIG. 7B illustrates a second deployment scenario in which the agent-based process orchestration system is deployed as a distributed system, with each module 102 as well as the process orchestrator 104 comprising an additional computing system to host its respective intelligent agent 200. An agent management dashboard 704 is optionally provided. The agent management dashboard 704 may be a separate computing system which shows the state of each module 102 and/or of the process orchestrator 104, to provide detailed insight regarding what each agent is doing. The agents 200 may provide detailed log messages of their activities. The agent management dashboard 704 can be used control the agents 200, for example to start or stop them or to check whether the communication between the agents is working, and/or to provide for manual control of the plant in case the agents malfunction for some reason.

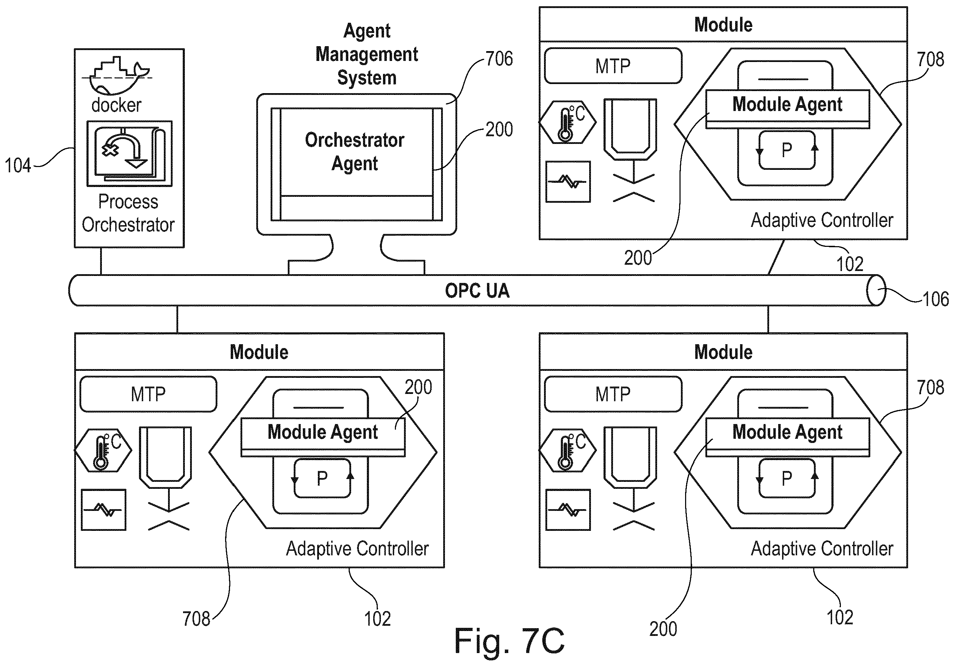

FIG. 7C illustrates a third deployment scenario in which the controller 108 of each module 102 as shown in FIG. 1A is adapted to comprise the module agent 200 so as to **become an** adaptive controller 708. The orchestration agent 200 is deployed separately to form the rest of the agent-based process orchestration system 706.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

For example, in addition to, or instead of, the model-based approach described herein, the intelligent agent 200 may operate using a model-free approach, such as (Deep) Q-Learning or similar reinforcement learning approaches. In a non-deterministic environment, for example when only a sub-set of the states and actions are known (e.g., during the tabular state/action setup), Q-Learning may be used to find a policy that maximizes the expected value of the total reward over any and all successive steps, starting from the current state (given infinite exploration time and a partly random action selection policy). For example, the approach may use a Q-Learning algorithm with the Bellman-equation in the core, or the SARSA/SARSA-lambda algorithm (state-action-reward-state-action). As the name reflects, the implementation follows the fact that the main function for updating the Q-value depends on the current state of the agent "s_t", the action the agent chooses "a_t", the reward "r_t" the agent gets for choosing this action, the state "s_t+1" that the agent enters after taking that action, and finally the next action "a_t+1" the agent chooses in its new state. Therefore, in each time step, the agent works with the quintuple (s_t, a_t, r_t, s_t+1, a_t+1).

Furthermore, an action *a* ∈ *Actₘ* can be selected from a given state (as per the policy function) based on an "exploration vs. exploitation" approach, for example using an adaptive epsilon-greedy-algorithm, with high epsilon (i.e., more exploration) in the beginning and low epsilon (i.e., more exploitation) later.

Furthermore, optimal hyperparameter settings (such as in particular the learning rate alpha) may be combined with specific designs of, and strategies for, the reinforcement learning algorithm's replay memory. Replay memory may be used effectively with model-free methods, in which it is impossible to store an infinite amount of state/action tuples in memory. In model-free methods, neural networks may approximate the Q-function (i.e., in place of inefficient giant-table-lookups, the neural network may be fed with S-A-R-S-A and trained so that the Q-function learns the reward, R). In order to avoid highly-correlated data (e.g., through sequences of observations) and non-stationary distributions (e.g., small updates to Q may significantly change the policy and the data distribution, such that smoothing changes in distributions are needed), an "experience replay" strategy may be applied, which uses a random sample of prior actions (s_t-1...N) instead of the most recent action (s_t-1) to proceed.

Moreover, although the examples above refer to an adaptive model, it will be understood that the model may alternatively be non-adaptive, i.e. static, implemented for example as a static rule-based model.

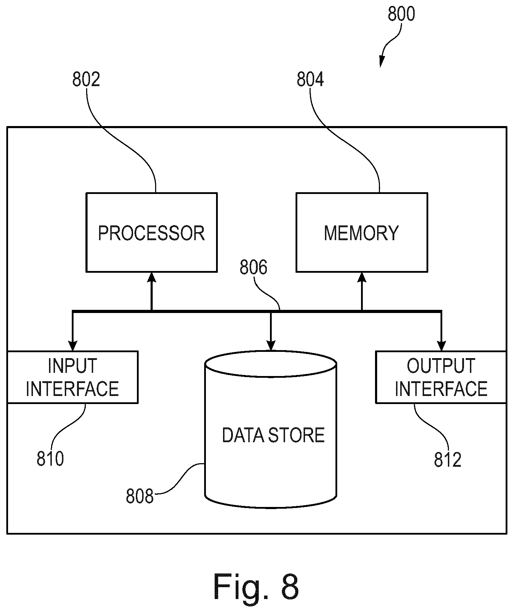

FIG. 8 illustrates an exemplary computing system 800 that can be used in accordance with the systems and methods disclosed herein. The computing system 800 may form part of or comprise any desktop, laptop, server, or cloud-based computing system. The computing system 800 includes at least one processor 802 that executes instructions that are stored in a memory 804. The instructions may be, for instance, instructions for implementing functionality described as being carried out by one or more components described herein or instructions for implementing one or more of the methods described herein. The processor 802 may access the memory 804 by way of a system bus 806. In addition to storing executable instructions, the memory 804 may also store conversational inputs, scores assigned to the conversational inputs, etc.

The computing system 800 additionally includes a data store 808 that is accessible by the processor 802 by way of the system bus 806. The data store 808 may include executable instructions, log data, etc. The computing system 800 also includes an input interface 810 that allows external devices to communicate with the computing system 800. For instance, the input interface 810 may be used to receive instructions from an external computer device, from a user, etc. The computing system 800 also includes an output interface 812 that interfaces the computing system 800 with one or more external devices. For example, the computing system 800 may display text, images, etc. by way of the output interface 812.

It is contemplated that the external devices that communicate with the computing system 800 via the input interface 810 and the output interface 812 can be included in an environment that provides substantially any type of user interface with which a user can interact. Examples of user interface types include graphical user interfaces, natural user interfaces, and so forth. For instance, a graphical user interface may accept input from a user employing input device(s) such as a keyboard, mouse, remote control, or the like and provide output on an output device such as a display. Further, a natural user interface may enable a user to interact with the computing system 800 in a manner free from constraints imposed by input device such as keyboards, mice, remote controls, and the like. Rather, a natural user interface can rely on speech recognition, touch and stylus recognition, gesture recognition both on screen and adjacent to the screen, air gestures, head and eye tracking, voice and speech, vision, touch, gestures, machine intelligence, and so forth.

Additionally, while illustrated as a single system, it is to be understood that the computing system 800 may be a distributed system. Thus, for instance, several devices may be in communication by way of a network connection and may collectively perform tasks described as being performed by the computing system 800.

Various functions described herein can be implemented in hardware, software, or any combination thereof. If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communication medium. Combinations of the above should also be included within the scope of computer-readable media.

Alternatively, or in addition, the functionally described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the invention, which is defined by the following claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

Any reference signs in the claims should not be construed as limiting the scope.

## Claims

1. A method performed by an intelligent agent (200) for autonomous operation of a module (102) or a process orchestrator (104) of a modular plant (100; 400), the method comprising:
collecting data from the module or the process orchestrator, wherein the collected data comprise values of one or more module alarms or process alarms;
using an adaptive model (310) to determine one or more actions (308) to be taken by the intelligent agent in response to the collected data, wherein the adaptive model (310) comprises a reinforcement learning model comprising a reward function (310B) and a policy function (310A), wherein a set of actions that the intelligent agent can take, a set of agent states in which the intelligent agent can operate, and a set of alarms that the module (102) or the process orchestrator (104) can receive, are predefined, wherein the policy function (310A) is configured to return the one or more actions to be taken given a current agent state and the collected data comprising the values of the one or more module alarms or process alarms;
taking the determined one or more actions, wherein the actions comprise transmitting one or more events and/or tuning one or more parameters, wherein the one or more events are transmitted to a module service and/or to the process orchestrator, wherein the one or more events transmitted to the module service comprise one or more commands to initiate a transition in a state of the module service, wherein the one or more events transmitted to the process orchestrator comprise one or more alarms, or one or more state changes of the module service, or one or more conclusions of functions executed on the module, wherein the parameters to be tuned comprise one or more module service parameters of the module service and/or one or more process parameters used by the process orchestrator, wherein the parameters comprise one or more setpoints for one or more PID controllers, wherein tuning the one or more parameters comprises increasing or decreasing the one or more setpoints,
the method further comprising:
receiving feedback relating to the adaptive model;
updating the adaptive model based on the received feedback to learn from the operational environment, and
operating the modular plant, wherein operating the modular plant comprises using the process orchestrator to orchestrate the module service in conjunction with one or more other module services in order to carry out a process recipe (450) for creating a product.

2. The method of claim 1, wherein the one or more events transmitted to the module service comprise one or more events selected from the following set: {start, pause, resume, complete, hold, abort, recover, restart}.

3. The method of claim 2, wherein the one or more events are transmitted to the module service executing on the same module (102) with which the intelligent agent (200) is associated or on a different module of the modular plant (100; 400).

4. The method of any of claims 1-3, wherein the collected data further comprise values of the one or more module service parameters and/or the one or more process parameters.

5. The method of claim 1, wherein the intelligent agent (200) is configured to learn the policy function (310A) mapping the collected data to the one or more actions (308) in order to maximize the reward function (310B).

6. The method of claim 5, wherein the steps of receiving feedback relating to the adaptive model (310) and updating the adaptive model based on the received feedback comprise receiving a reward based on action taken and learning the policy function (310A) to maximize the expected cumulative reward.

7. An intelligent agent (200) configured to perform the method of any preceding claim.

8. A computer program comprising instructions which, when executed by a computing system (800), cause the computing system to perform the method of any of claims 1-6.

9. A computer-readable medium (804, 808) comprising instructions which, when executed by a computing system (800), cause the computing system to perform the method of any of claims 1-6.

## Patentansprüche

1. Verfahren, das von einem intelligenten Agenten (200) zum autonomen Betrieb eines Moduls (102) oder eines Prozess-Orchestrators (104) einer modularen Anlage (100; 400) durchgeführt wird, wobei das Verfahren umfasst:
Erfassen von Daten aus dem Modul oder dem Prozess-Orchestrator, wobei die erfassten Daten Werte eines oder mehrerer Modulalarme oder Prozessalarme umfassen;
Verwenden eines adaptiven Modells (310) zur Bestimmung einer oder mehrerer Maßnahmen (308), die der intelligente Agent als Reaktion auf die erfassten Daten ergreifen soll, wobei das adaptive Modell (310) ein Modell des verstärkenden Lernens umfasst, das eine Belohnungsfunktion (310B) und eine Strategie-Funktion (310A) aufweist, wobei eine Menge von Maßnahmen, die der intelligente Agent ergreifen kann, eine Menge von Agentenzuständen, in denen der intelligente Agent operieren kann, und eine Menge von Alarmen, die das Modul (102) oder der Prozess-Orchestrator (104) empfangen kann, vordefiniert sind, wobei die Strategie-Funktion (310A) so konfiguriert ist, dass sie die eine oder mehrere auszuführende Aktionen unter Berücksichtigung eines aktuellen Agentenzustands und der erfassten Daten, die die Werte der einen oder mehreren Modul- oder Prozessalarme umfassen, zurückgibt;
Durchführung der festgelegten einen oder mehreren Aktionen, wobei die Aktionen das Senden eines oder mehrerer Ereignisse und/oder das Anpassen eines oder mehrerer Parameter umfassen, wobei das eine oder die mehreren Ereignisse an einen Moduldienst und/oder an den Prozess-Orchestrator gesendet werden, wobei das an den Moduldienst gesendete eine Ereignis oder die mehreren Ereignisse einen oder mehrere Befehle zum Auslösen eines Zustandsübergangs des Moduldienstes umfassen, wobei das an den Prozess-Orchestrator gesendete eine Ereignis oder die mehreren Ereignisse einen oder mehrere Alarme, oder eine oder mehrere Zustandsänderungen des Moduldienstes oder einen oder mehrere Abschlussvorgänge von auf dem Modul ausgeführten Funktionen umfassen, wobei die abzustimmenden Parameter einen oder mehrere Moduldienstparameter des Moduldienstes und/oder einen oder mehrere vom Prozessorchestrator verwendete Prozessparameter umfassen, wobei die Parameter einen oder mehrere Sollwerte für einen oder mehrere PID-Regler umfassen, wobei das Abstimmen des einen oder der mehreren Parameter das Erhöhen oder Verringern des einen oder der mehreren Sollwerte umfasst,
wobei das Verfahren ferner umfasst:
das Empfangen von Rückmeldungen bezüglich des adaptiven Modells;
Aktualisieren des adaptiven Modells auf der Grundlage der empfangenen Rückmeldung, um aus der Betriebsumgebung zu lernen, und
Betreiben der modularen Anlage, wobei das Betreiben der modularen Anlage die Verwendung des Prozess-Orchestrators umfasst, um den Moduldienst in Verbindung mit einem oder mehreren anderen Moduldiensten zu orchestrieren, um ein Prozessrezept (450) zur Herstellung eines Produkts auszuführen.

2. Verfahren nach Anspruch 1, wobei das eine oder die mehreren an den Moduldienst übermittelten Ereignisse ein oder mehrere Ereignisse umfassen, die aus der folgenden Menge ausgewählt sind: {Start, Pause, Fortsetzen, Fertigstellen, Halten, Abbrechen, Wiederherstellen, Neustart}.

3. Verfahren nach Anspruch 2, wobei das eine oder die mehreren Ereignisse an den Moduldienst übertragen werden, der auf demselben Modul (102) ausgeführt wird, dem der intelligente Agent (200) zugeordnet ist, oder auf einem anderen Modul der modularen Anlage (100; 400).

4. Verfahren nach einem der Ansprüche 1 bis 3, wobei die erfassten Daten ferner Werte der einen oder mehreren Moduldienstparameter und/oder der einen oder mehreren Prozessparameter umfassen.

5. Verfahren nach Anspruch 1, wobei der intelligente Agent (200) so konfiguriert ist, dass er die Strategie-Funktion (310A) erlernt, die die erfassten Daten auf die eine oder mehrere Aktionen (308) abbildet, um die Belohnungsfunktion (310B) zu maximieren.

6. Verfahren nach Anspruch 5, wobei die Schritte des Empfangens von Rückmeldungen bezüglich des adaptiven Modells (310) und des Aktualisierens des adaptiven Modells auf der Grundlage der empfangenen Rückmeldungen das Empfangen einer Belohnung auf der Grundlage der durchgeführten Aktion und das Erlernen der Strategie-Funktion (310A) zur Maximierung der erwarteten kumulativen Belohnung umfassen.

7. Intelligenter Agent (200), der so konfiguriert ist, dass er das Verfahren eines beliebigen der vorstehenden Ansprüche ausführt.

8. Computerprogramm, das Anweisungen aufweist, die, wenn sie von einem Computersystem (800) ausgeführt werden, bewirken, dass das Computersystem das Verfahren gemäß einem der Ansprüche 1 bis 6 ausführt.

9. Computerlesbares Medium (804, 808), das Befehle aufweist, die, wenn sie von einem Computersystem (800) ausgeführt werden, bewirken, dass das Computersystem das Verfahren gemäß einem der Ansprüche 1 bis 6 ausführt.

## Revendications

1. Procédé exécuté par un agent intelligent (200) pour le fonctionnement autonome d'un module (102) ou d'un orchestrateur de processus (104) d'une installation modulaire (100 ; 400), le procédé comprenant :
la collecte de données auprès du module ou de l'orchestrateur de processus, les données collectées comprenant des valeurs d'une ou de plusieurs alarmes de module ou alarmes de processus ;
l'utilisation d'un modèle adaptatif (310) pour déterminer une ou plusieurs actions (308) à entreprendre par l'agent intelligent en réponse aux données collectées, le modèle adaptatif (310) comprenant un modèle d'apprentissage par renforcement comprenant une fonction de récompense (310B) et une fonction de politique (310A), dans lequel un ensemble d'actions que l'agent intelligent peut entreprendre, un ensemble d'états d'agent dans lesquels l'agent intelligent peut fonctionner, et un ensemble d'alarmes que le module (102) ou l'orchestrateur de processus (104) peut recevoir sont prédéfinis, la fonction de politique (310A) étant configurée pour renvoyer la ou les actions à entreprendre en fonction d'un état d'agent courant et les données collectées comprenant les valeurs de la ou des alarmes de module ou alarmes de processus ;
l'entreprise de la ou des actions déterminées, les actions comprenant la transmission d'un ou de plusieurs événements et/ou le réglage d'un ou de plusieurs paramètres, le ou les événements étant transmis à un service de module et/ou à l'orchestrateur de processus, le ou les événements transmis au service de module comprenant une ou plusieurs commandes pour initier une transition dans un état du service de module, le ou les événements transmis à l'orchestrateur de processus comprenant une ou plusieurs alarmes, ou un ou plusieurs changements d'état du service de module, ou une ou plusieurs conclusions de fonctions exécutées sur le module, dans lequel les paramètres à régler comprennent un ou plusieurs paramètres de service de module du service de module et/ou un ou plusieurs paramètres de processus utilisés par l'orchestrateur de processus, les paramètres comprenant une ou plusieurs consignes pour une ou plusieurs commandes PID, le réglage du ou des paramètres comprenant l'augmentation ou la diminution de la ou des consignes,
le procédé comprenant en outre :
la réception d'un retour d'informations relatif au modèle adaptatif ;
la mise à jour du modèle adaptatif sur la base du retour d'informations reçu pour apprendre de l'environnement opérationnel, et
l'actionnement de l'installation modulaire, l'actionnement de l'installation modulaire comprenant l'utilisation de l'orchestrateur de processus pour orchestrer le service de module conjointement avec un ou plusieurs autres services de module afin d'exécuter une recette de processus (450) pour créer un produit.

2. Procédé selon la revendication 1, dans lequel le ou les événements transmis au service de module comprennent un ou plusieurs événements sélectionnés parmi l'ensemble suivant : {début, pause, reprise, fin, attente, abandon, récupération, redémarrage}.

3. Procédé selon la revendication 2, dans lequel le ou les événements sont transmis au service de module exécuté sur le même module (102) auquel l'agent intelligent (200) est associé ou sur un module différent de l'installation modulaire (100 ; 400).

4. Procédé selon l'une quelconque des revendications 1 à 3, dans lequel les données collectées comprennent en outre des valeurs du ou des paramètres de service de module et/ou du ou des paramètres de processus.

5. Procédé selon la revendication 1, dans lequel l'agent intelligent (200) est configuré pour apprendre la fonction de politique (310A) mappant les données collectées à la ou aux actions (308) afin de maximiser la fonction de récompense (310B).

6. Procédé selon la revendication 5, dans lequel les étapes de réception d'un retour d'informations relatif au modèle adaptatif (310) et de mise à jour du modèle adaptatif sur la base du retour d'informations reçu comprennent la réception d'une récompense sur la base de l'action entreprise et l'apprentissage de la fonction de politique (310A) pour maximiser la récompense cumulative attendue.

7. Agent intelligent (200) configuré pour exécuter le procédé selon l'une quelconque des revendications précédentes.

8. Programme informatique comprenant des instructions qui, lorsqu'elles sont exécutées par un système informatique (800), amènent le système informatique à exécuter le procédé selon l'une quelconque des revendications 1 à 6.

9. Support lisible par ordinateur (804, 808) comprenant des instructions qui, lorsqu'elles sont exécutées par un système informatique (800), amènent le système informatique à exécuter le procédé selon l'une quelconque des revendications 1 à 6.
